(19) **Europäisches Patentamt**
**European Patent Office**
**Office européen des brevets**

(11) **EP 4 606 659 A1**

(12) **EUROPEAN PATENT APPLICATION**
published in accordance with Art. 153(4) EPC

(43) Date of publication:
**27.08.2025 Bulletin 2025/35**

(21) Application number: **23879683.3**

(22) Date of filing: **11.10.2023**

(51) International Patent Classification (IPC):
**B60T 7/12** (2006.01)   **G08G 1/16** (2006.01)
**B60W 30/09** (2012.01)   **B60W 60/00** (2020.01)
**B60T 1/14** (2006.01)

(52) Cooperative Patent Classification (CPC):
**B60T 1/14; B60T 7/12; B60W 30/09; B60W 60/00;
G08G 1/16**

(86) International application number:
**PCT/JP2023/036930**

(87) International publication number:
**WO 2024/085040 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022   JP 2022169078**
**16.12.2022   JP 2022201402**
**16.12.2022   JP 2022201614**

(71) Applicant: **SoftBank Group Corp.
Tokyo 105-7537 (JP)**

(72) Inventor: **SON, Masayoshi
Tokyo 105-7537 (JP)**

(74) Representative: **DREISS Patentanwälte PartG
mbB
Friedrichstraße 6
70174 Stuttgart (DE)**

(54) **INFORMATION PROCESSING DEVICE, VEHICLE, AND PROGRAM**

(57)   An information processing device includes an information acquisition unit that acquires plurality of sensor information including information regarding an obstacle, and a control unit that controls a speed of a vehicle to avoid the obstacle in a case in which the information acquisition unit acquires the information regarding the obstacle.

FIG.14

EP 4 606 659 A1

## Description

Technical Field

The present disclosure relates to an information processing device, a vehicle, and a program.

Background Art

Patent Literature 1 discloses a vehicle having an autonomous driving function.

1: Japanese Patent Application Laid-Open (JP-A) No. 2022-035198

SUMMARY OF INVENTION

Solution to Problem

According to an embodiment of the disclosure, an information processing device is provided. An information processing device according to a first aspect includes an information acquisition unit that acquires a plurality of information; and a control unit that controls a speed of a vehicle for avoiding an obstacle in a case in which the information acquisition unit acquires information regarding the obstacle.

According to an information processing device of a second aspect, in the information processing device of the first aspect, the control unit calculates a control variable for controlling a speed of the vehicle, and controls autonomous driving of the vehicle in units of nanoseconds on the basis of the control variable.

According to an information processing device of a third aspect, in the information processing device of the first aspect, the control unit avoids the obstacle by controlling an edge that is provided on a bottom surface of the vehicle to cause the vehicle to jump.

According to an embodiment of the disclosure, a vehicle is provided. A vehicle of a fourth aspect includes a vehicle body; a first edge configured to be pushed out from a bottom surface of the vehicle body; a second edge configured to be pushed out from the bottom surface of the vehicle body at a position closer to a center of the vehicle than the first edge on the bottom surface; and an information processing device, in which the information processing device includes an information acquisition unit that acquires a plurality of sensor information including information regarding an obstacle, and a control unit that, in a case in which the information acquisition unit acquires the information regarding the obstacle, controls the first edge and the second edge such that the obstacle is avoided by the first edge being pushed out to cause the vehicle to jump in order to avoid the obstacle, and the first edge is returned to an original state and the second edge is pushed out to cause the vehicle to land from the second edge when the vehicle lands.

A vehicle of a fifth aspect includes a vehicle body; an edge configured to be pushed out from a bottom surface of the vehicle body; an elastic body having an elasticity higher than an elasticity of the edge and configured to be pushed out from the bottom surface of the vehicle body; and an information processing device, in which the information processing device includes an information acquisition unit that acquires a plurality of sensor information including information regarding an obstacle, and a control unit that, in a case in which the information acquisition unit acquires the information regarding the obstacle, controls the edge and the elastic body such that the obstacle is avoided by the edge being pushed out to cause the vehicle to jump in order to avoid the obstacle, and the edge is returned to an original state and the elastic body is pushed out to cause the vehicle to land from the elastic body when the vehicle lands.

According to a vehicle of a sixth aspect, in the vehicle of the fourth aspect, the information acquisition unit detects the obstacle in units of nanoseconds, and the control unit controls the first edge and the second edge in units of nanoseconds.

According to a vehicle of a seventh aspect, in the vehicle of the fifth aspect, the information acquisition unit detects the obstacle in units of nanoseconds, and the control unit controls the edge and the elastic body in units of nanoseconds.

An information processing device of an eighth aspect includes an information acquisition unit that acquires a plurality of sensor information including information regarding an obstacle; and a control unit that controls an edge that is provided on a bottom surface of a vehicle to cause the vehicle to jump, thereby avoiding the obstacle, in which the control unit calculates a control variable for controlling an obstacle avoidance behavior of the vehicle on the basis of a characteristic of an occupant of the vehicle.

According to an information processing device of a ninth aspect, in the information processing device of the eighth aspect, the control unit controls autonomous driving of the vehicle in units of nanoseconds on the basis of the control variable.

According to an information processing device of a tenth aspect, in the information processing device of the eighth aspect, the control unit updates the characteristic on the basis of a reaction of the occupant of the vehicle at the time of avoiding the obstacle.

According to an information processing device of an eleventh aspect, in the information processing device of the eighth aspect, whether to avoid the obstacle by controlling the edge is selectable in advance by the occupant.

According to an embodiment of the disclosure, there is provided a program for causing a computer to function as the information processing device according to any one of the first to eleventh aspects.

The above summary of the disclosure does not enumerate all the necessary features of the disclosure. A subcombination of these feature groups can also be included in the disclosure.

BRIEF DESCRIPTION OF DRAWINGS

Fig. 1 is a diagram schematically showing danger prediction capability of AI in ultra-high performance autonomous driving.

Fig. 2 is a diagram schematically showing an example of a network configuration in a vehicle.

Fig. 3 is a diagram schematically showing an example of a stage of a proportional constant.

Fig. 4 is a diagram schematically showing an example of a stage of a proportional constant.

Fig. 5 is a diagram schematically showing an example of a stage of a proportional constant.

Fig. 6 is a flowchart executed by a central brain.

Fig. 7 is a first explanatory diagram for describing an example of a stop distance of a vehicle.

Fig. 8 is a second explanatory diagram for describing an example of a stop distance of a vehicle 12.

Fig. 9 is a third explanatory diagram for describing an example of a stop distance of the vehicle 12.

Fig. 10 is a fourth explanatory diagram for describing an example of a stop distance of the vehicle 12.

Fig. 11 is an explanatory diagram for describing an example of autonomous driving control performed by the central brain.

Fig. 12 is a schematic diagram of perfect steering control and perfect steering control.

Fig. 13 is an explanatory diagram for describing an edge.

Fig. 14 is an explanatory diagram for describing an operation example of the edge performed by the central brain.

Fig. 15 is an explanatory diagram for describing a first edge and a second edge.

Fig. 16 is an explanatory diagram for describing an operation example of the first and second edges performed by the central brain.

Fig. 17 is an explanatory diagram for describing an operation example of the first and second edges performed by the central brain.

Fig. 18 is an explanatory diagram for describing an edge and an elastic body.

Fig. 19 is an explanatory diagram for describing an operation example of the edge and the elastic body performed by the central brain.

Fig. 20 is an explanatory diagram for describing an operation example of the edge and the elastic body performed by the central brain.

Fig. 21 is a diagram schematically showing an example of a hardware configuration of a computer functioning as the central brain.

DESCRIPTION OF EMBODIMENTS

Hereinafter, the disclosure will be described through embodiments of the disclosure, but the following embodiments do not limit the invention according to the claims. Not all combinations of features described in the embodiments are essential to the solution of the disclosure.

(first Embodiment)

First, a first embodiment according to the present embodiment will be described.

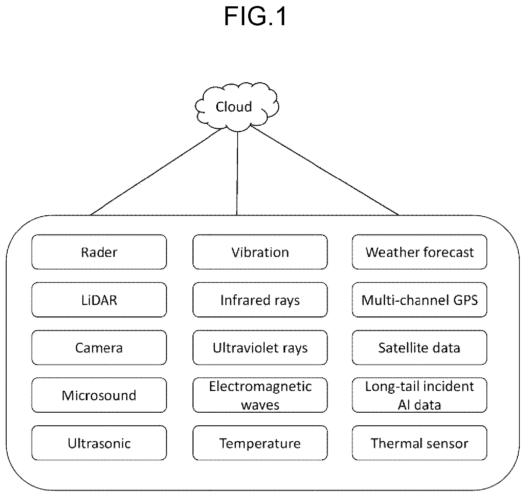

Fig. 1 schematically shows danger prediction capability of AI in ultra-high performance autonomous driving according to the embodiment. In the embodiment, a plurality of types of sensor information are converted into AI data and accumulated in a cloud. The AI predicts and determines the best mix of situations every nanosecond and optimizes an operation of a vehicle 12. In the embodiment, the vehicle 12 is desirably an electric car.

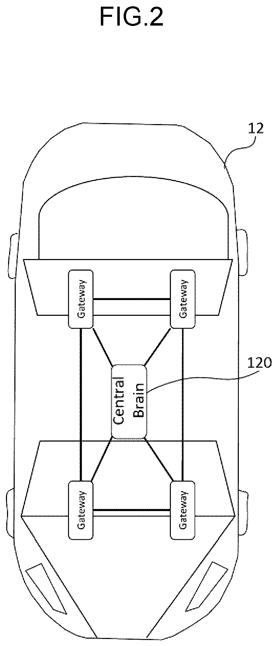

Fig. 2 is a diagram for describing a configuration of a central brain 120 in the vehicle 12. The central brain 120 is an example of an information processing device.

As shown in Fig. 2, a plurality of gateways are communicatively connected to the central brain 120. The central brain 120 is connected to an external cloud via a gateway. The central brain 120 is configured to be able to access an external cloud via the gateway. On the other hand, due to the presence of the gateway, the central brain 120 is configured to be not able to be directly accessed from the outside.

The central brain 120 outputs a request signal to a server every time a predetermined time elapses. Specifically, the central brain 120 outputs a request signal indicating an inquiry to the server every nanosecond.

Examples of sensors used in the embodiment include a radar, a LiDAR, a high-pixel/telephoto/ultra-wide angle/360 degrees/high-performance camera, vision recognition, microsound, ultrasonic, vibration, infrared, ultraviolet, electromagnetic wave, temperature, humidity, spot AI weather forecast, high-precision multi-channel GPS, low-altitude satellite information, and long tail incident AI data. The long tail incident AI data is trip data of an automobile mounted at Level 5.

Examples of the sensor information incorporated from the plurality of types of sensors include movement of the center of gravity of the weight, a material of a road, the outside air temperature, the outside air humidity, vertical and lateral inclination angles of a slope, freezing of a road, a moisture amount, a material of each tire, a wear situation, an air pressure, a road width, the presence or absence of passing prohibition, the vehicle type information of an oncoming vehicle and front and rear vehicles, cruising states of these vehicles, and surrounding situations (birds, animals, soccer balls, accident vehicles, earthquakes, fire, winds, typhoons, heavy rain, light rain, snowstorm, fog, and the like). In the embodiment, detection of such information is performed every nanosecond.

In the embodiment, the central brain 120 functions as a control unit that controls a speed of the vehicle 12 for avoiding an obstacle in the case of acquiring information acquired by an information acquisition unit, such as road information (examples: a material of a road, vertical and lateral inclination angles of a slope, freezing of the road, and a moisture amount of the road) indicating road conditions of the road on which the vehicle is traveling, including information regarding the obstacle such as a vehicle having a breakdown on the road, detected by the sensor described above.

In the embodiment, the central brain 120 functions as a control unit that calculates a control variable for controlling a speed of the vehicle and controls autonomous driving of the vehicle in units of nanoseconds on the basis of the control variable. Specifically, the central brain 120 controls a speed (acceleration/deceleration) of the vehicle according to the following relational expression. Perfect cornering without friction is realized.

[Math. 1]

$$y=ax^2$$

Here, a is a proportional constant and is an example of a control variable. The perfect cornering without friction indicates a good smooth perfect acceleration. This mathematical expression can express perfect acceleration. The proportional constant can be smoothly changed in any number of stages every nanosecond. The central brain 120 calculates a proportional constant from sensor information such as a driving time, battery depletion, a situation such as instantaneous emergency avoidance (avoid accidents), a state of a material such as a tire (material condition), and a variable such as a wind speed, finely adjusts a difference by matching data accumulated in the cloud, and correctly transmits a value of the proportional constant derived through the goal seek to in-wheel motors mounted on four wheels 21 and four spin angles, thereby realizing perfect speed control and perfect steering control for performing optimum acceleration/deceleration. This is an object-oriented goal seek traveling system. Realizing such traveling is a role of Level 6. Here, "Level 6" is a level representing autonomous driving and corresponds to a level higher than Level 5 representing fully autonomous driving. Level 5 represents fully autonomous driving but is equivalent to human driving, and there is still a probability that an accident or the like will occur. Level 6 represents a level higher than Level 5, and corresponds to a level at which a probability of the occurrence of an accident is lower than Level 5.

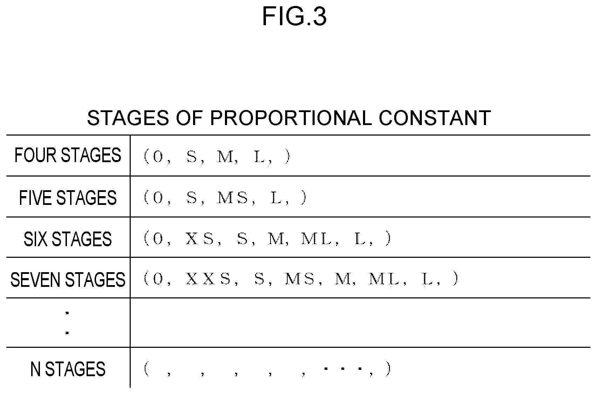

Figs. 3 to 5 are diagrams for describing stages of a proportional constant.

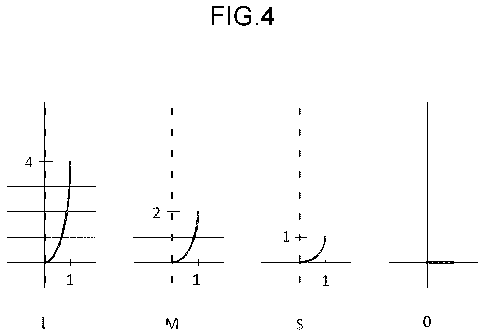

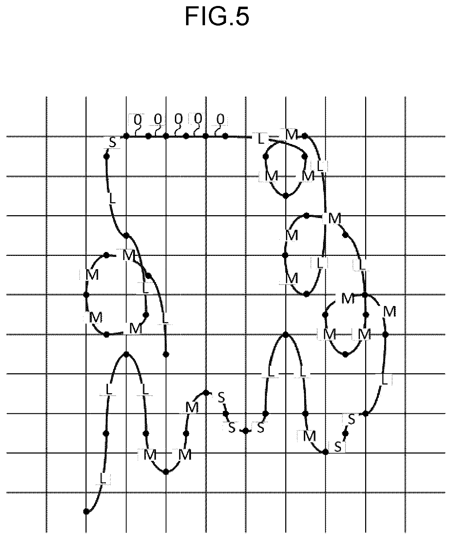

As shown in Fig. 3, for example, in a case in which the number of stages of the proportional constant are four, there are cases of 0, S, M, and L (L is maximum performance). As described above, the proportional constant can be changed to any number of stages every nanosecond, and the in-wheel motors mounted on the four wheels 21 are commanded to perform acceleration/deceleration. Fig. 4 is a graph showing a case in which the proportional constant has four stages. As shown in Fig. 5, a speed of the vehicle can be varied by combining a plurality of stages of proportional constants.

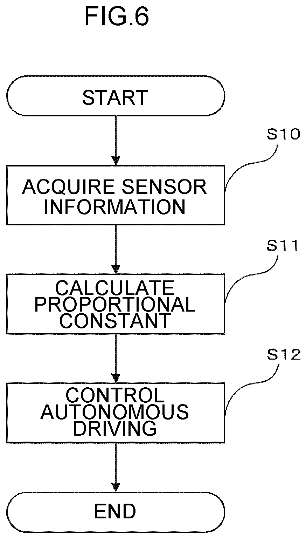

The central brain 120 repeatedly executes the flowchart shown in Fig. 6.

In step S10, the central brain 120 acquires sensor information including information regarding an obstacle 13 and road information detected by the sensor. The central brain 120 proceeds to step S11.

In step S11, the central brain 120 calculates a proportional constant on the basis of the sensor information acquired in step S10. The central brain 120 proceeds to step S12.

In step S12, the central brain 120 controls the autonomous driving on the basis of the proportional constant calculated in step S11. The central brain 120 ends the processing of the flowchart.

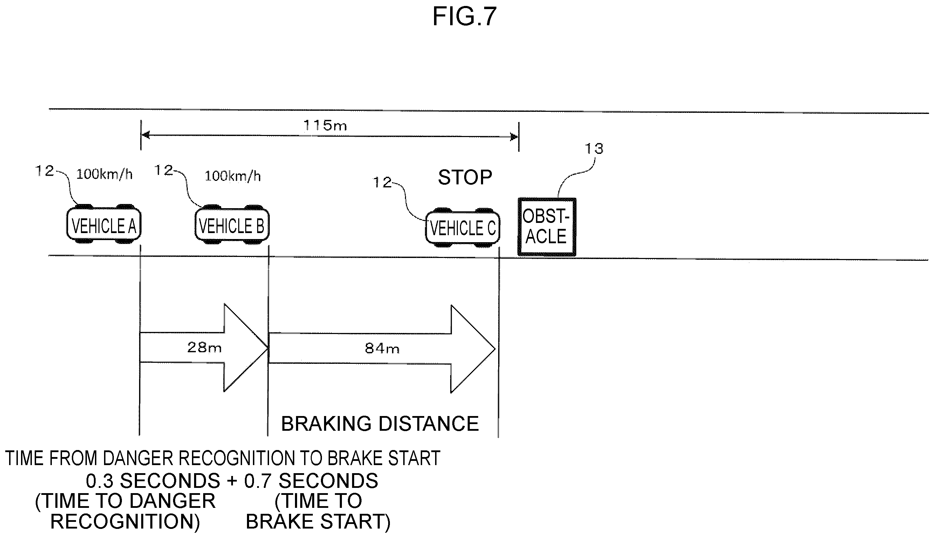

Figs. 7 to 10 are explanatory diagrams for describing an example of a stop distance of the vehicle 12.

Fig. 7 shows an example of a case in which the vehicle 12 traveling at a speed of 100 km/h (per hour) acquires information regarding the obstacle 13 at a point of 115 m (meters) from the obstacle 13. In this example, 0.3 seconds is required from the acquisition of the information regarding the obstacle 13 (a position of a vehicle A) to danger recognition, and 0.7 seconds is required from the danger recognition to the brake start, and the vehicle 12 moves about 28 m (a position of a vehicle B) during a total of 1.0 second. For example, it is shown that a braking distance is 84 m until the vehicle 12 stops (a position of a vehicle C).

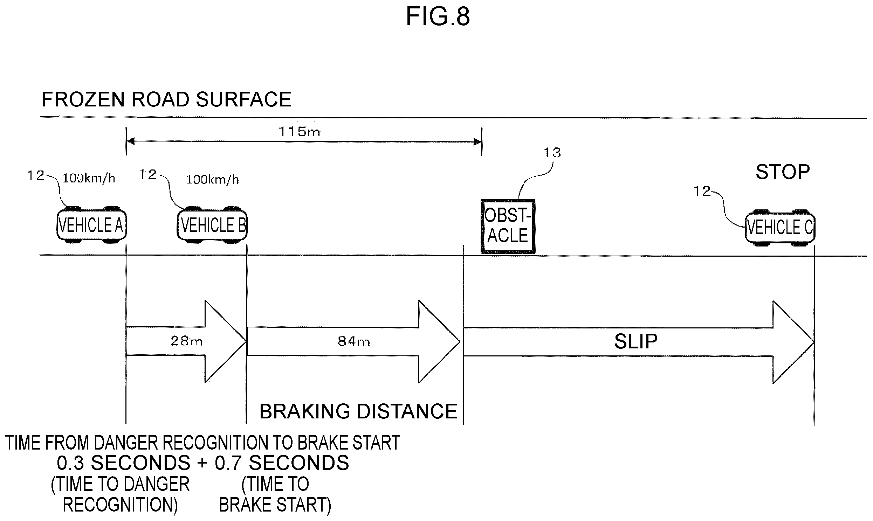

Fig. 8 shows an example of a case in which the vehicle 12 traveling at a speed of 100 km/h on a frozen road surface acquires information regarding the obstacle 13 at a point of 115 m (meters) from the obstacle 13. In this example, 0.3 seconds is required from the acquisition of the information regarding the obstacle 13 (a position of a vehicle A) to danger recognition, and 0.7 seconds is required from the danger recognition to the brake start, and the vehicle 12 moves about 28 m (a position of a vehicle B) during a total of 1.0 second. For example, as shown in Fig. 7 described above, in a case in which the braking distance is 84 m until the vehicle 12 stops, the vehicle 12 further slips and stops (the position of the vehicle C).

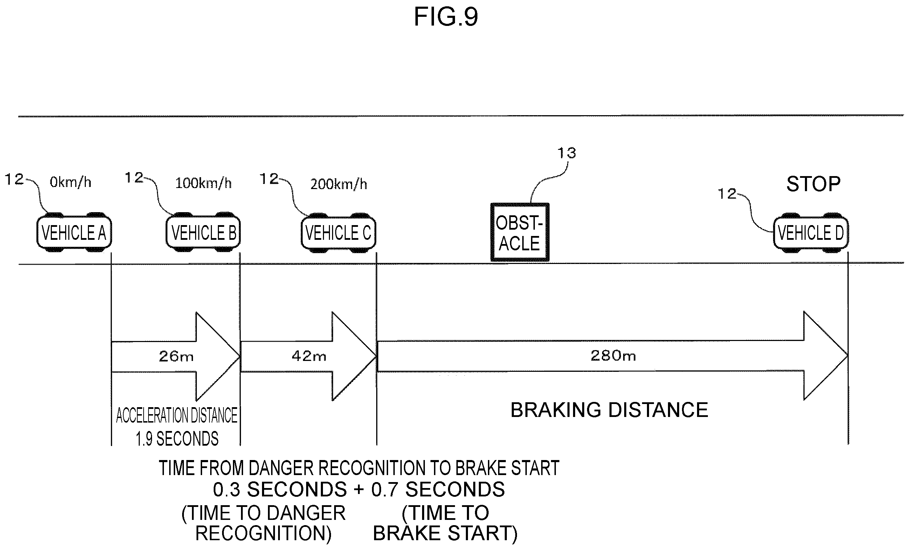

Fig. 9 shows an example of a case in which information regarding the obstacle 13 is acquired after the stopped vehicle 12 accelerates to a speed of 100 km/h. In this example, the stopped vehicle 12 (the position of the vehicle A) accelerates to 100 km/h in 1.9 seconds (26 m), requires 0.3 seconds from acquisition of information regarding the obstacle 13 (the position of the vehicle B) to danger recognition, and requires 0.7 seconds (the position of the vehicle C) from danger recognition to brake start. During a total of 1.0 second, the vehicle 12 reaches a speed of 200 km/h and moves about 42 m (the position of the vehicle C). For example, it is shown that the braking distance is 280 m until the vehicle 12 stops (the position of the vehicle D).

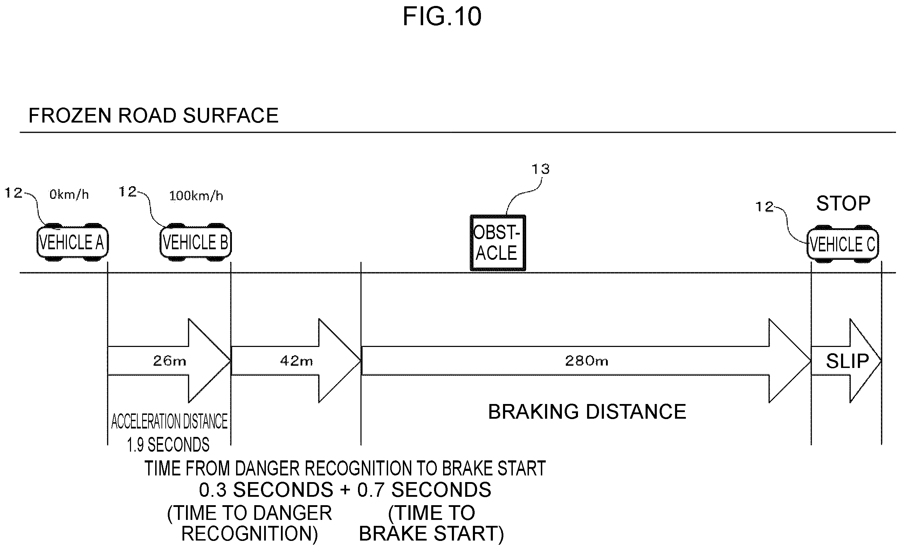

Fig. 10 shows an example of a case in which information regarding the obstacle 13 is acquired after the stopped vehicle 12 accelerates to a speed of 100 km/h on a frozen road surface. In this example, the stopped vehicle 12 (the position of the vehicle A) accelerates to 100 km/h in 1.9 seconds (26 m), requires 0.3 seconds from acquisition of information regarding the obstacle 13 (the position of the vehicle B) to danger recognition, and requires 0.7 seconds (the position of the vehicle C) from danger recognition to brake start. During a total of 1.0 second, the vehicle 12 reaches a speed of 200 km/h and moves about 42 m (the position of the vehicle C). For example, as shown in Fig. 9 described above, in a case in which the braking distance is 280 m until the vehicle 12 stops, the vehicle 12 further slips and stops (the position of the vehicle D).

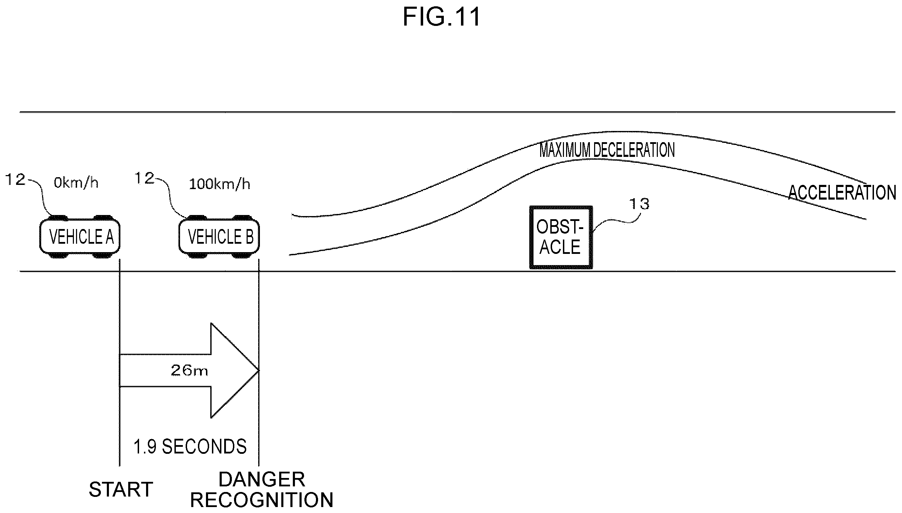

Fig. 11 is an explanatory diagram for describing an example of autonomous driving control performed by the central brain 120.

Fig. 11 shows an example in which the central brain 120 avoids the obstacle 13 by controlling a speed of the vehicle 12 on the basis of a proportional constant that is calculated by the central brain 120 on the basis of sensor information such as a driving time, battery depletion, a situation such as instantaneous emergency avoidance (avoid accidents), a state of a material such as a tire (material condition), and a variable such as wind speed, and an example in which information regarding the obstacle 13 is acquired after the stopped vehicle 12 has accelerated to a speed of 100 km/h on a frozen road surface. This example indicates that the vehicle accelerates to 100 km/h in 1.9 seconds (26 m) in a state of the stopped vehicle 12 (the position of the vehicle A), and decelerates and accelerates by controlling autonomous driving of the vehicle immediately (nanosecond) in a case in which information regarding the obstacle 13 is acquired (the position of the vehicle B).

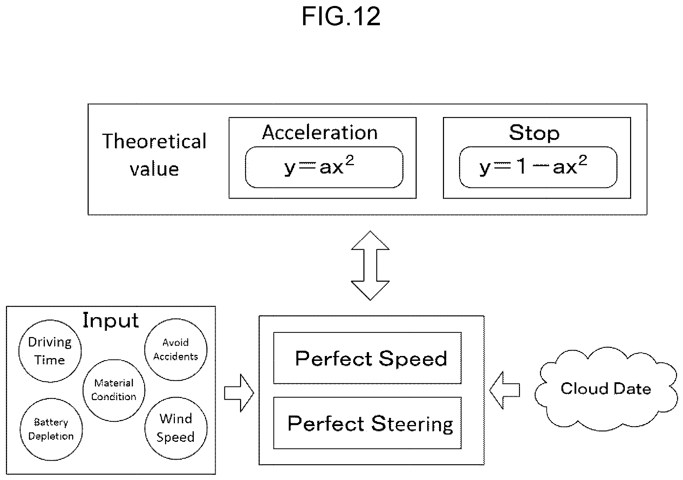

Fig. 12 schematically shows perfect speed control and perfect steering control realized by the information processing device according to the embodiment. According to the principle shown in Fig. 12, a speed of a vehicle is calculated, and perfect speed control and perfect steering control are realized from inputs and cloud date.

Here, a conventional autonomous driving vehicle can perform cornering in consideration of a road condition to a certain extent, but has not performed accurate cornering in units of nanoseconds. A certain distance is required until the autonomous driving vehicle detects an obstacle and stops by applying the brake.

Therefore, in the conventional autonomous driving vehicle, since cornering cannot be accurately controlled in units of nanoseconds, an accident such as slip has occurred during cornering. Even if theoretical accurate cornering could be calculated, cornering could not be performed in consideration of various actual friction situations (tires, road situations, air temperatures, temperatures, humidities, wind speeds, etc.).

According to the vehicle 12 of the embodiment, the safety of the autonomous driving can be enhanced on the basis of the configuration described above.

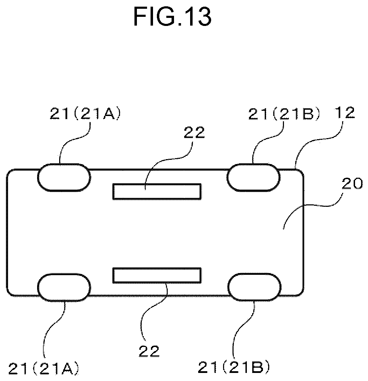

In the embodiment, even in a case in which the obstacle 13 cannot be avoided by controlling the speed of the vehicle 12 or in a case in which the obstacle 13 can be avoided by controlling the speed of the vehicle 12, the central brain 120 is provided on a bottom surface 20 of the vehicle body of the vehicle 12 and functions as a control unit that avoids the obstacle 13 by pushing out edges 22 from the bottom surface 20 to cause the vehicle 12 to jump. Specifically, as shown in Fig. 13, the edges 22 that protrude from the bottom surface 20 toward the road and can be pushed out toward the road are provided between front wheels 21A and rear wheels 21B of the wheels 21 on the bottom surface 20 of the vehicle 12. The edges 22 are not limited to having the shape shown in Fig. 13. The edges are not limited to one on each of the left and right sides of the vehicle 12, and a plurality of edges may be provided, or edges may be provided at various places of the vehicle 12.

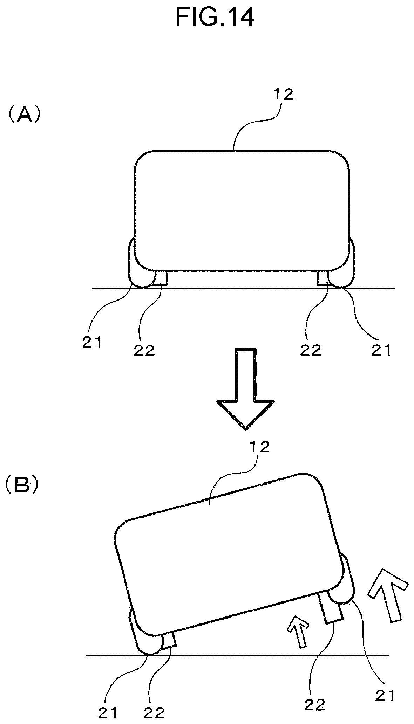

From the normal state in Fig. 14(A), as shown in Fig. 14(B), the central brain 120 pushes out the edge 22 to the road side to cause the vehicle 12 to jump in the case of avoiding the obstacle 13. Here, a mechanism such as a motor that pushes out the edge 22 to the road side is not shown. The central brain 120 may push out both the left and right edges 22 instead of pushing out only one of the left and right edges 22, or may push out the left and right edges 22 at different timings. The central brain 120 may control the pushing-out of the edge 22 and the speed of the vehicle 12 to rotate the vehicle 12. The central brain 120 enables smooth landing of the vehicle 12 through the perfect speed control and the perfect steering control after such a jump. Even in a case in which the obstacle 13 (for example, a truck burning on a road) is detected, the vehicle 12 cannot stop depending on a speed of the vehicle 12 and a distance to the obstacle 13, and thus cannot avoid a collision between the vehicle 12 and the obstacle 13. However, with such a configuration, the safety of the autonomous driving can be enhanced. By jumping over the obstacle 13, the obstacle 13 can be avoided even in a case in which the obstacle 13 cannot be avoided by controlling a speed of the vehicle 12.

(Second Embodiment)

Next, a second embodiment according to the embodiment will be described while omitting or simplifying an overlapping portion with the above embodiment.

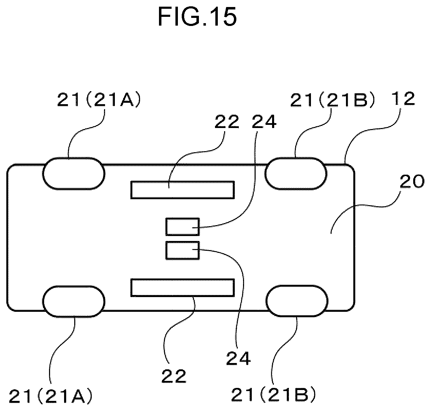

In the second embodiment, as shown in Fig. 15, in addition to the edges 22, other edges 24 may be further provided at positions closer to the center of the vehicle 12 than the edges 22 on the bottom surface 20 of the vehicle 12. Specifically, as shown in Fig. 15, the edge 24 (referred to as a second edge 24) may be provided on the inner side of the edge 22 (hereinafter, referred to as a first edge 22) in the width direction of the vehicle 12. The second edge 24 has a shorter length in the front-rear direction of the vehicle 12 than the first edge 22. The second edges 24 are not limited to one on each of the left and right sides of the vehicle 12, and a plurality of second edges 24 may be provided.

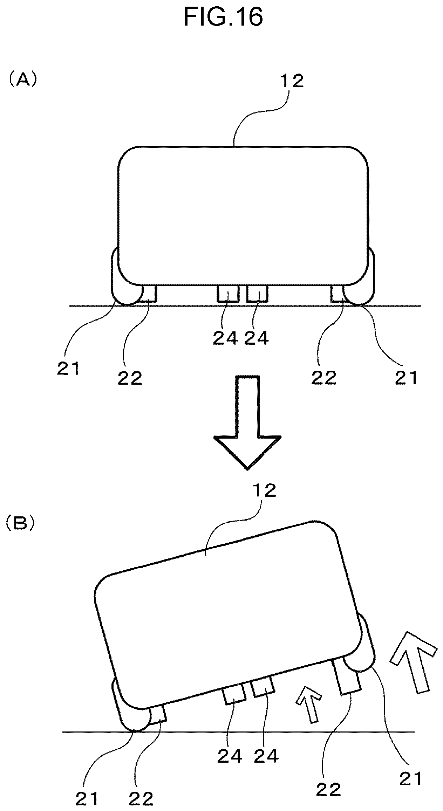

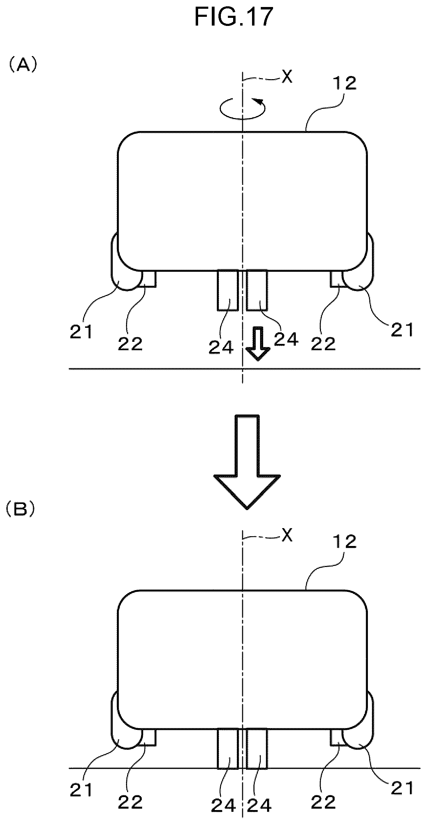

In this case, from the normal state shown in Fig. 16(A), as shown in Fig. 16(B), the central brain 120 pushes out only one of the left and right first edges 22 to the road side to cause the vehicle 12 to jump in the case of avoiding the obstacle 13. Pushing out one of the left and right first edges 22 causes the vehicle 12 to rotate in the air around an axis X passing through the center of gravity as shown in Fig. 17(A). At the time of landing, as shown in Fig. 17(A), the central brain 120 returns the first edge 22 to the original state and pushes out both of the second edges 24 from the bottom surface 20 of the vehicle 12. Here, a mechanism such as a motor that pushes out the second edges 24 to the road side is not shown. As a result, as shown in Fig. 17(B), the vehicle 12 lands from the second edges 24 before the wheels 21 while rotating. After the vehicle 12 lands and stops, the central brain 120 returns the second edge 24 to the original state. As a result, a state of the vehicle 12 returns to the normal state shown in Fig. 16(A).

As described above, in a case in which the vehicle 12 is rotating and jumping, the landing of the vehicle 12 can be stabilized by causing the vehicle 12 to land first from the second edge 24 provided at a position closer to the center of the vehicle 12 than the first edge 22.

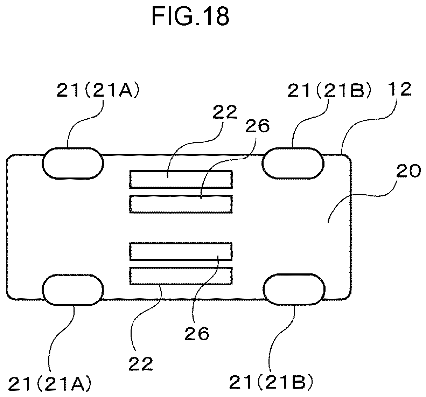

In addition to the edge 22, as shown in Fig. 18, an elastic body 26 having an elasticity higher than that of the edge 22 may be provided on the bottom surface of the vehicle 12. Specifically, as shown in Fig. 18, the elastic body 26 may be provided on the inner side of the edge 22 in the width direction of the vehicle 12. The elastic body 26 is not limited to one on each of the left and right sides of the vehicle 12, and a plurality of elastic bodies may be provided, or the elastic bodies may be provided in various places of the vehicle 12.

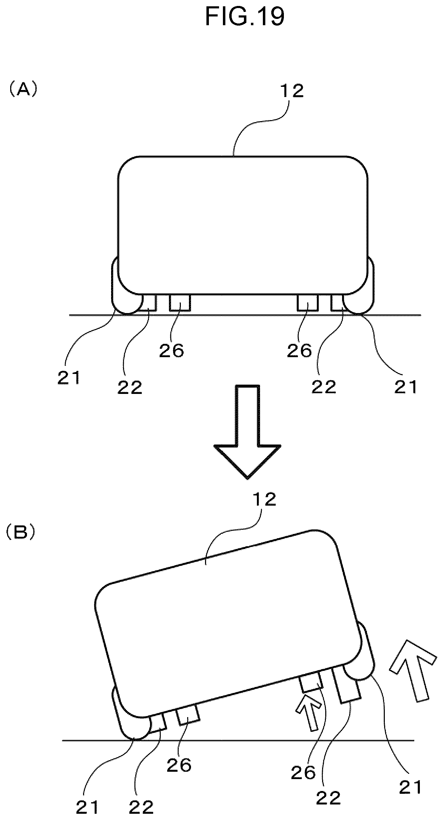

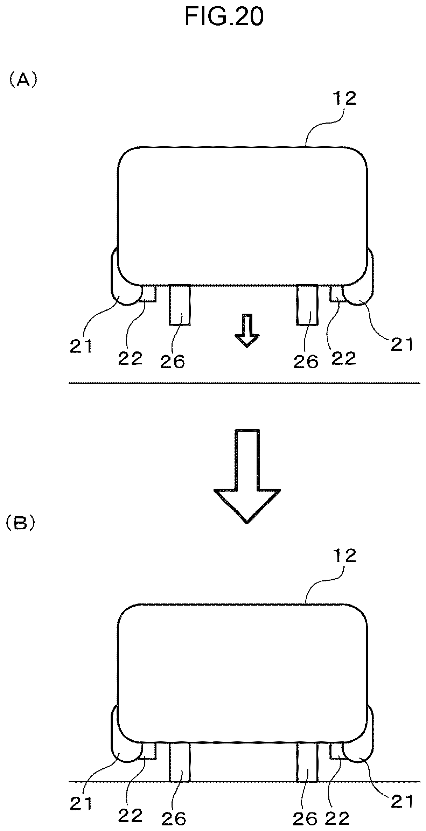

In this case, from the normal state in Fig. 19(A), as shown in Fig. 19(B), the central brain 120 pushes out the edge 22 to the road side to cause the vehicle 12 to jump in the case of avoiding the obstacle 13. At the time of landing, as shown in Fig. 20(A), the central brain 120 returns the edge 22 to the original state and pushes out both of the elastic bodies 26 from the bottom surface 20 of the vehicle 12. Here, a mechanism such as a motor that pushes out the elastic body 26 to the road side is not shown. As a result, as shown in Fig. 20(B), the vehicle 12 lands from the elastic body 26 before the wheels 21. After landing, the central brain 120 returns the elastic body 26 to the original state. As a result, a state of the vehicle 12 returns to the normal state shown in Fig. 19(A).

As described above, after the vehicle 12 jumps, the elastic body 26 having a higher elastic modulus than that of the edge 22 is caused to land first, whereby the landing of the vehicle 12 can be stabilized.

(Third Embodiment)

Next, a third embodiment according to the embodiment will be described while omitting or simplifying an overlapping portion with the above embodiments.

In the third embodiment, the central brain 120 calculates a control variable for controlling an obstacle avoidance behavior of the vehicle 12 on the basis of characteristics of an occupant of the vehicle 12. Specifically, the central brain 120 controls the edges 22 in addition to a speed (acceleration/deceleration) of the vehicle or separately from the speed (acceleration/deceleration) of the vehicle according to Formula 1 described above. In addition to the characteristics of an occupant, the central brain 120 calculates a proportional constant from sensor information such as a driving time, battery depletion, a situation such as instantaneous emergency avoidance (avoid accidents), a state of a material such as a tire (material condition), and a variable such as a wind speed, finely adjusts a difference by matching data accumulated in the cloud, and transmits a value of the proportional constant derived through the goal seek to a motor that correctly pushes out the edge 22 to the road side, thereby realizing perfect speed control and perfect steering control for performing an optimal jump.

Here, stages of the proportional constant can be changed to any number of stages every nanosecond as in the case of the vehicle speed described above. That is, a speed or an amount of pushing the edge 22 to the road side can be changed in any number of stages.

The characteristics of an occupant include, for example, tolerance to an action such as a jump of the vehicle 12, susceptibility to carsickness, and fear of jumping of the vehicle 12. The characteristics of an occupant may include other characteristics, for example, the age, the gender, a medical history, driving skills, and the like of the occupant. That is, although the behavior is for avoiding an obstacle, it is expected that there is an occupant who feels fear of jumping in the vehicle 12, and a proportional constant can be changed according to the characteristics of the occupant. The characteristics of an occupant may be determined by causing an occupant to input data, and may be determined by the central brain 120 storing an occupant and acquiring sensor information of a riding state for each occupant. Specifically, the central brain 120 executes, for an input occupant who is afraid of jumping in the vehicle 12, setting a proportional constant for reducing the degree of jumping, avoiding an obstacle without jumping, and the like.

The central brain 120 may update the characteristics of an occupant on the basis of a reaction of the occupant of the vehicle 12 in the case of avoiding an obstacle. That is, the central brain 120 stores an occupant, and acquires sensor information (including a heart rate, a stress value, an image, and the like) indicating that the occupant was afraid of the obstacle avoidance behavior performed on the occupant to update the characteristics of the occupant. With such a configuration, it is possible to set a proportional constant for reducing the degree of jumping in a case in which an occupant is frightened or the like, and to execute avoidance of an obstacle without jumping. In a case in which the occupant is not frightened, it is possible to set a proportional constant that increases the degree of jumping.

Whether to avoid an obstacle by controlling the edge 22 may be selectable in advance by an occupant. That is, although the behavior is for avoiding an obstacle, it is expected that there is an occupant who feels fear of jumping in the vehicle 12, and it may be made possible to select to cause the occupant to preferentially execute an avoidance behavior other than jumping.

The central brain 120 may input the characteristics of the occupant to a trained model that has learned the characteristics of the occupant and the reaction to the executed obstacle avoidance behavior, and determine a proportional constant on the basis of an output result.

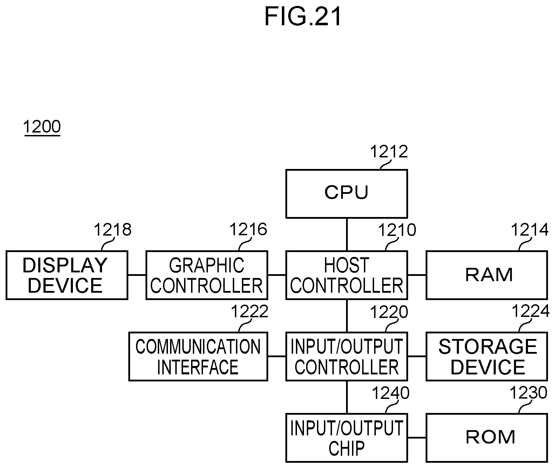

Fig. 21 schematically shows an example of a hardware configuration of a computer 1200 that functions as the central brain 120. A program installed in the computer 1200 can cause the computer 1200 to function as one or more "units" of the device according to the embodiment, or cause the computer 1200 to execute an operation associated with the device according to the embodiment or one or more "units" thereof, and/or cause the computer 1200 to execute a process according to the embodiment or a stage of the process. Such a program may be executed by a CPU 1212 to cause the computer 1200 to execute specific operations associated with some or all of the blocks in the flowcharts and the block diagrams described in the present specification.

The computer 1200 according to the embodiment includes the CPU 1212, a RAM 1214, and a graphic controller 1216, which are mutually connected via a host controller 1210. The computer 1200 also includes input/output units such as a communication interface 1222, a storage device 1224, a DVD drive, and an IC card drive, which are connected to the host controller 1210 via the input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and the data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer readable storage medium such as a DVD-ROM or an IC card. The program is read from a computer readable storage medium, installed in the storage device 1224, the RAM 1214, or the ROM 1230, which is also an example of a computer readable storage medium, and executed by the CPU 1212. The information processing described in such a program is read by the computer 1200 and provides cooperation between the program and the various types of hardware resources. A device or a method may be configured by implementing operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read the whole or a necessary portion of a file or a database stored in an external recording medium such as the storage device 1224, a DVD drive (DVD-ROM), or an IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute, on the data read from the RAM 1214, various types of processing including various types of operations, information processing, condition determination, conditional branching, unconditional branching, information retrieval/replacement, and the like, which are described throughout the disclosure and designated by a command sequence of a program, and writes back results thereof to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a designated condition from the plurality of entries, read the attribute value of the second attribute stored in the entry, and thus acquire the attribute value of the second attribute associated with the first attribute satisfying a predetermined condition.

The program or software module described above may be stored in a computer readable storage medium on the computer 1200 or in the vicinity of the computer 1200. A recording medium such as a hard disk or a RAM provided in a server system connected to a dedicated communication network or the Internet can be used as a computer readable storage medium, thereby providing a program to the computer 1200 via the network.

The blocks in the flowcharts and block diagrams in the embodiment may represent stages of a process in which an operation is executed or "units" of a device having a function of executing the operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

Although the disclosure has been described with reference to the embodiments, the technical scope of the disclosure is not limited to the scope described in the embodiments. It is apparent to those skilled in the art that various modifications or improvements can be made to the above embodiments. It is apparent from the description of the claims that modes to which such modifications or improvements are added can also be included in the technical scope of the disclosure.

It should be noted that the order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

The disclosure of Japanese Patent Application No. 2022-169078 filed on October 21, 2022, the disclosure of Japanese Patent Application No. 2022-201402 filed on December 16, 2022, and the disclosure of Japanese Patent Application No. 2022-201614 filed on December 16, 2022 are incorporated herein by reference in their entirety.

All documents, patent applications, and technical standards described in this specification are incorporated herein by reference to the same extent as if each document, patent application, and technical standard were specifically and individually indicated to be incorporated by reference.

**Claims**

1. An information processing device comprising:

   an information acquisition unit that acquires a plurality of sensor information including information regarding an obstacle; and
   a control unit that controls a speed of a vehicle for avoiding the obstacle in a case in which the information acquisition unit acquires the information regarding the obstacle.

2. The information processing device according to claim 1, wherein the control unit calculates a control variable for controlling a speed of the vehicle, and controls autonomous driving of the vehicle in units of nanoseconds on the basis of the control variable.

3. The information processing device according to claim 1, wherein the control unit avoids the obstacle by controlling an edge that is provided on a bottom surface of the vehicle to cause the vehicle to jump.

4. A vehicle comprising:

   a vehicle body;
   a first edge configured to be pushed out from a bottom surface of the vehicle body;
   a second edge configured to be pushed out from the bottom surface of the vehicle body at a position closer to a center of the vehicle than the first edge on the bottom surface; and
   an information processing device, wherein
   the information processing device includes
   an information acquisition unit that acquires a plurality of sensor information including information regarding an obstacle, and
   a control unit that, in a case in which the information acquisition unit acquires the information regarding the obstacle, controls the first edge and the second edge such that the obstacle is avoided by the first edge being pushed out to cause the vehicle to jump in order to avoid the obstacle, and the first edge is returned to an original state and the second edge is pushed out to cause the vehicle to land from the second edge when the vehicle lands.

5. A vehicle comprising:

   a vehicle body;
   an edge configured to be pushed out from a bottom surface of the vehicle body;
   an elastic body having an elasticity higher than an elasticity of the edge which is configured to be pushed out from the bottom surface of the vehicle body; and
   an information processing device, wherein
   the information processing device includes
   an information acquisition unit that acquires a plurality of sensor information including information regarding an obstacle, and
   a control unit that, in a case in which the information acquisition unit acquires the information regarding the obstacle, controls the edge and the elastic body such that the obstacle is avoided by the edge being pushed out to cause the vehicle to jump in order to avoid the obstacle, and the edge is returned to an original state and the elastic body is pushed out to cause the vehicle to land from the elastic body when the vehicle lands.

6. The vehicle according to claim 4, wherein

   the information acquisition unit detects the obstacle in units of nanoseconds, and
   the control unit controls the first edge and the second edge in units of nanoseconds.

7. The vehicle according to claim 5, wherein

   the information acquisition unit detects the obstacle in units of nanoseconds, and
   the control unit controls the edge and the elastic body in units of nanoseconds.

8. An information processing device comprising:

   an information acquisition unit that acquires a plurality of sensor information including information regarding an obstacle; and
   a control unit that controls an edge that is provided on a bottom surface of a vehicle to cause the vehicle to jump, thereby avoiding the obstacle, wherein
   the control unit calculates a control variable for controlling an obstacle avoidance behavior of the vehicle on the basis of a characteristic of an occupant of the vehicle.

9. The information processing device according to claim 8, wherein the control unit controls autonomous driving of the vehicle in units of nanoseconds on the basis of the control variable.

**10.** The information processing device according to claim 8, wherein the control unit updates the characteristic on the basis of a reaction of the occupant of the vehicle at the time of avoiding the obstacle.

**11.** The information processing device according to claim 8, wherein whether to avoid the obstacle by controlling the edge is selectable in advance by the occupant.

**12.** A program for causing a computer to function as the information processing device according to any one of claims 1 to 11.

# FIG.1

| | | |
|---|---|---|
| Rader | Vibration | Weather forecast |
| LiDAR | Infrared rays | Multi-channel GPS |
| Camera | Ultraviolet rays | Satellite data |
| Microsound | Electromagnetic waves | Long-tail incident AI data |
| Ultrasonic | Temperature | Thermal sensor |

# FIG.2

# FIG.3

STAGES OF PROPORTIONAL CONSTANT

| FOUR STAGES | (O, S, M, L, ) |
|---|---|
| FIVE STAGES | (O, S, MS, L, ) |
| SIX STAGES | (O, XS, S, M, ML, L, ) |
| SEVEN STAGES | (O, XXS, S, MS, M, ML, L, ) |
| . . | |
| N STAGES | ( , , , , , · · ·, ) |

# FIG.4

# FIG.5

# FIG.6

```
        ┌─────────────┐
        │    START    │
        └──────┬──────┘
               │
               ▼                    S10
        ┌─────────────┐
        │ACQUIRE SENSOR│
        │ INFORMATION │
        └──────┬──────┘
               │
               ▼                    S11
        ┌─────────────┐
        │  CALCULATE  │
        │ PROPORTIONAL │
        │   CONSTANT  │
        └──────┬──────┘
               │
               ▼                    S12
        ┌─────────────┐
        │   CONTROL   │
        │ AUTONOMOUS  │
        │   DRIVING   │
        └──────┬──────┘
               │
               ▼
        ┌─────────────┐
        │     END     │
        └─────────────┘
```

# FIG.7

EP 4 606 659 A1

115m

13

12 100km/h    12 100km/h    12    STOP

VEHICLE A    VEHICLE B    VEHICLE C    OBST-ACLE

28m    84m

BRAKING DISTANCE

TIME FROM DANGER RECOGNITION TO BRAKE START
0.3 SECONDS + 0.7 SECONDS
(TIME TO DANGER        (TIME TO
RECOGNITION)      BRAKE START)

# FIG.8

FROZEN ROAD SURFACE

|←———————— 115m ————————→|

12 100km/h     12    100km/h                                    13                    STOP
                                                                                      12
[VEHICLE A]     [VEHICLE B]                          [OBST-                    [VEHICLE C]
                                                      ACLE]

        28m              84m                              SLIP

              BRAKING DISTANCE

TIME FROM DANGER RECOGNITION TO BRAKE START
    0.3 SECONDS + 0.7 SECONDS
    (TIME TO DANGER        (TIME TO
      RECOGNITION)      BRAKE START)

EP 4 606 659 A1

# FIG.9

12 — 0km/h  VEHICLE A

12 — 100km/h  VEHICLE B

12 — 200km/h  VEHICLE C

13  OBST-ACLE

STOP

12 — VEHICLE D

26m

ACCELERATION DISTANCE
1.9 SECONDS

42m

280m

BRAKING DISTANCE

TIME FROM DANGER RECOGNITION TO BRAKE START
0.3 SECONDS + 0.7 SECONDS
(TIME TO DANGER          (TIME TO
RECOGNITION)     BRAKE START)

EP 4 606 659 A1

## FIG.10

FROZEN ROAD SURFACE

12 — 0km/h   12 — 100km/h

13

VEHICLE A   VEHICLE B

OBST-ACLE

12 — STOP

VEHICLE C

26m   42m   280m   SLIP

ACCELERATION DISTANCE
1.9 SECONDS

BRAKING DISTANCE

TIME FROM DANGER RECOGNITION TO BRAKE START
0.3 SECONDS + 0.7 SECONDS
(TIME TO DANGER        (TIME TO
RECOGNITION)       BRAKE START)

EP 4 606 659 A1

# FIG.11

# FIG.12

Theoretical value

Acceleration

$$y = ax^2$$

Stop

$$y = 1 - ax^2$$

Input

Driving Time

Avoid Accidents

Material Condition

Battery Depletion

Wind Speed

Perfect Speed

Perfect Steering

Cloud Date

FIG.13

21(21A)       22       21(21B)   12

20

21(21A)       22       21(21B)

# FIG.14

(A)

12

21   22          22   21

↓

(B)

12

21   22          22   21

FIG.15

# FIG.16

(A)

(B)

# FIG.17

(A)

(B)

FIG.18

# FIG.19

(A)

(B)

# FIG.20

(A)

(B)

# FIG.21

1200

1212

CPU

1218        1216        1210        1214

DISPLAY
DEVICE — GRAPHIC
CONTROLLER — HOST
CONTROLLER — RAM

1222        1220        1224

COMMUNICATION
INTERFACE — INPUT/OUTPUT
CONTROLLER — STORAGE
DEVICE

1240        1230

INPUT/OUTPUT
CHIP — ROM

## INTERNATIONAL SEARCH REPORT

International application No.

**PCT/JP2023/036930**

### A. CLASSIFICATION OF SUBJECT MATTER

***B60T 7/12***(2006.01)i; ***G08G 1/16***(2006.01)i; ***B60W 30/09***(2012.01)i; ***B60W 60/00***(2020.01)i; ***B60T 1/14***(2006.01)i
FI: G08G1/16 C; B60W30/09; B60W60/00; B60T1/14; B60T7/12 C

According to International Patent Classification (IPC) or to both national classification and IPC

### B. FIELDS SEARCHED

Minimum documentation searched (classification system followed by classification symbols)

B60T1/14; B60T7/12; G08G1/16; B60W30/09; B60W60/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-259151 A (DENSO CORP) 16 September 2004 (2004-09-16) | 1-2, 12 |
|   | claim 1, paragraph [0032] |  |
| Y | claim 1, paragraph [0032] | 3 |
| A | claim 1, paragraph [0032] | 4-11 |
| Y | JP 8-188027 A (NISSAN DIESEL MOTOR CO LTD) 23 July 1996 (1996-07-23) | 3 |
|   | paragraphs [0017]-[0021], fig. 1-10 |  |
| A | JP 2018-114774 A (DENSO CORP) 26 July 2018 (2018-07-26) | 1-12 |
|   | entire text, all drawings |  |
| A | JP 2011-063240 A (HONDA MOTOR CO LTD) 31 March 2011 (2011-03-31) | 1-12 |
|   | entire text, all drawings |  |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

**INTERNATIONAL SEARCH REPORT**
Information on patent family members

International application No.

**PCT/JP2023/036930**

| Patent document cited in search report | | | Publication date (day/month/year) | Patent family member(s) | | | Publication date (day/month/year) |
|---|---|---|---|---|---|---|---|
| JP | 2004-259151 | A | 16 September 2004 | US 2004/0199327 A1 claim 1, paragraph [0039] | | | |
| JP | 8-188027 | A | 23 July 1996 | (Family: none) | | | |
| JP | 2018-114774 | A | 26 July 2018 | US 2019/0329745 A1 entire text, all drawings WO 2018/131595 A1 CN 110191826 A | | | |
| JP | 2011-063240 | A | 31 March 2011 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035198 A
- JP 2022169078 A
- JP 2022201402 A
- JP 2022201614 A